**Europäisches Patentamt**

(19) **European Patent Office**

**Office européen des brevets**

(11) Numéro de publication: **0 162 046 B1**

(12) # FASCICULE DE BREVET EUROPEEN

(45) Date de publication du fascicule du brevet:
20.11.86

(51) Int. Cl.⁴: **F 16 K 7/10,** F 16 K 23/00, B 05 B 1/30

(21) Numéro de dépôt: **84900508.7**

(22) Date de dépôt: **25.01.84**

(86) Numéro de dépôt international:
**PCT/EP 84/00019**

(87) Numéro de publication internationale:
**WO 84/02965 (02.08.84** Gazette 84/18)

(54) **DISPOSITIF DE FERMETURE DE BUSES MUNI D'UN MOYEN D'ACCROCHAGE DE BUSES POUR RAMPE DE PULVERISATION OU D'EPANDAGE.**

Jointe à la demande no. 84200097.8/0116984 (numéro de dépôt/numéro de publication de la demande européenne) par décision du 20.12.85.

(30) Priorité: **27.01.83 LU 84610**

(43) Date de publication de la demande:
**27.11.85 Bulletin 85/48**

(45) Mention de la délivrance du brevet:
**20.11.86 Bulletin 86/47**

(84) Etats contractants désignés:
**AT BE CH DE FR GB IT LI LU NL SE**

(56) Documents cités:
**BE - A - 474 638**
**DE - C - 1 035 435**
**FR - A - 1 053 752**
**FR - A - 1 336 067**
**FR - A - 2 151 711**
**FR - A - 2 290 254**
**GB - A - 2 030 474**
**US - A - 3 684 177**
**US - A - 3 890 994**

(73) Titulaire: **Gentet, Clément, Chemin du Falourdeau, F-78750 Mareil Marly (FR)**

(72) Inventeur: **Gentet, Clément, Chemin du Falourdeau, F-78750 Mareil Marly (FR)**

(74) Mandataire: **van Malderen, Michel et al, p.a. FREYLINGER & ASSOCIES 85/042 Boulevard de la Sauvenière, B-4000 Liège (BE)**

ACTORUM AG

## Description

La présente invention concerne un dispositif de fermeture rapide de buses dit «antigoutte» pouvant être monté sur des rampes comportant une pluralité de buses de pulvérisation ou d'épandage alimentées par une conduite reliée à un réservoir contenant sous forme liquide le produit à distribuer et comportant une pompe assurant la circulation de ce liquide et un moyen d'accrochage de buses.

Dans le cas de l'épandage ou de la pulvérisation d'engrais, de pesticides, etc., un problème important réside dans la difficulté d'obtenir une fermeture immédiate des buses lorsque l'opérateur désire interrompre l'alimentation des buses. On sait qu'une distribution régulière des produits de traitement est de grande importance, d'une part pour assurer une distribution minimale assurant l'efficacité souhaitée et d'autre part pour éviter un surdosage qui provoquerait des brûlures et autres dégâts (retard de croissance) aux cultures agricoles.

Plusieurs solutions ont déjà été proposées par différents constructeurs de matériel agricole. Ainsi, on connaît un dispositif équipé d'un clapet à ressort taré entrant en action dès que la pression du produit à épandre devient inférieure à la pression du ressort. Cependant, l'entrée en action des clapets intervient dans la majeure partie des cas avec un certain retard par rapport à la commande de l'opérateur.

D'autres dispositifs travaillent au moyen d'une commande de fermeture de vanne à air comprimé. Ainsi, on connaît des dispositifs antigoutte comportant deux chambres étanches délimitées par une membrane souple, l'une des deux chambres recevant le produit à épandre, tandis que l'autre est remplie d'un fluide, qui porté à haute pression empêche le passage du liquide à épandre dans la buse en obturant un orifice au moyen de ladite membrane. Voir FR-A-2.151.711, qui présente un dispositif de fermeture rapide correspondant au préambule de la revendication 1, et FR-A-2.290.254.

Ce dispositif présente cependant l'inconvénient d'être très compliqué et coûteux, étant donné la nécessité de réaliser des chambres étanches aux hautes pressions et de disposer d'une membrane résistant à l'agressivité des divers produits à pulvériser. La solution de l'état de la technique comporte également une déviation pratiquement en angle droit du courant de liquide, entraînant des pertes de charges non négligeables.

Enfin, par le document DE-C-1 025 435, on connaît un dispositif de fermeture auxiliaire pour soupapes de forage qui permettent d'accéder à un conduit sous pression sans pour autant couper la pression de gaz ou de liquide régnant dans le conduit ou vider le conduit en question. Ce dispositif consiste essentiellement en un doigt muni d'un alésage qui est entouré, au moins sur la longueur correspondant à l'ouverture à obturer, d'une coiffe en caoutchouc qui peut être mise sous pression en vue d'assurer la fermeture de l'ouverture de passage. Le fonctionnement du dispositif nécessite un montage dudit doigt sur le corps de la vanne, un vissage manuel dans un taraudage pour assurer l'étanchéité à l'extrémité du doigt, avant d'actionner l'obturation par mise sous pression. Ce document se distingue de la présente invention par le fait que le but, c'est-à-dire l'utilisation, en est totalement différent. Le document cité ne vise pas un système d'obturation rapide (antigoutte) pour des buses de pulvérisation et n'est pas transposable à des rampes de pulvérisation qui peuvent avoir des portées jusqu'à 36 mètres en comportant deux buses de pulvérisation par mètre courant, montées en série et alimentées par une conduite nourricière à circulation continue en circuit fermé. La construction obtenue dans le DE-C-1.035.435 résulte de la fonction à remplir, à savoir étanchéité mais également rétractabilité du dispositif auxiliaire.

La présente invention a donc pour but de surmonter les inconvénients précités en fournissant un nouveau dispositif antigoutte présentant une efficacité au moins aussi bonne que les solutions de l'état de la technique qui est cependant de conception très simple, facile à construire et robuste pour résister à toutes les sollicitations auxquelles sont soumis les dispositifs de ce genre dans les usages agricoles et autres.

Le but de la présente invention est atteint par un dispositif de fermeture rapide, tel qu'il est caractérisé dans la revendication 1. Des modes particuliers de réalisation de l'invention apparaissent dans les revendications dépendantes.

Le dispositif de l'invention permet d'obturer de manière efficace les buses de pulvérisation en jouant le rôle d'une vanne. Il trouve son application dans tous les dispositifs d'épandage de liquide par buse de pulvérisation et n'est pas limité aux domaines agricoles, d'autres applications par exemple forestières, de désherbage de routes ou bas-côtés, etc., pouvant être envisagées.

Suivant un mode d'exécution préféré de l'invention, le dispositif est constitué d'une pièce à deux conduits globalement orthogonaux communicants. Le conduit principal est adapté pour s'engager dans la conduite d'alimentation d'une part, et pour recevoir la buse de pulvérisation d'autre part, le conduit secondaire étant gainé par un tuyau souple traversant le conduit de part en part sans l'obturer tout en étant engagé de manière étanche dans le conduit secondaire et alimenté en un fluide sous pression pour obturer le conduit principal.

Avantageusement, le raccordement étanche du tuyau souple dans le conduit secondaire est assuré par un tube ou une gaine souple prise à au moins une extrémité entre un tube rigide intérieur et une gaine semi-rigide extérieure sertie par un raccord bicône, le tube ou la gaine souple traversant le conduit de part en part et le tube rigide étant adapté pour recevoir, à son extrémité libre sortant du dispositif, le conduit d'alimentation en fluide sous pression.

Lorsque le tuyau souple est gonflé sous l'action d'un fluide sous pression, il obture le passage du liquide du conduit principal vers la buse. Lorsqu'on diminue la pression, il reprend sa forme initiale et le liquide peut s'écouler vers la buse.

Les tubes rigides peuvent comporter des raccordements instantanés pour permettre l'alimentation et l'interconnexion de plusieurs dispositifs en série, par exemple.

On constate que le dispositif de la présente invention est simple et peu coûteux puisqu'il peut utiliser des éléments existant déjà sur le marché tels que des raccords universels et instantanés produits par différentes firmes.

De préférence, ledit fluide sous pression est de l'air comprimé. Le tube souple est avantageusement constitué par une matière plastique souple ou un caoutchouc résistant aux produits agressifs.

Il faut cependant veiller à utiliser une gaine souple maintenant toutes ses caractéristiques de souplesse et d'étanchéité après de nombreuses utilisations dans le milieu généralement agressif constitué par les produits à pulvériser ou à épandre.

On a constaté que généralement, pour obtenir un effet antigoutte efficace, il faut gonfler une telle gaine souple pour des buses travaillant à environ 3 bars par une pression supérieure de 3 bars au moins à la pression du liquide à pulvériser ou à épandre.

Généralement, on recourt à une pression d'air comprimé de l'ordre de 7 bars.

La présente invention sera décrite plus en détail au moyen des figures annexées dans lesquelles:
— la figure 1 représente un dispositif de fermeture suivant l'invention en demi-coupe;
— la figure 2 représente, à une échelle agrandie, un moyen d'accrochage de buse particulier;
— la figure 3 représente un autre mode d'exécution du dispositif de l'invention, et
— la figure 4 représente un troisième mode d'exécution.

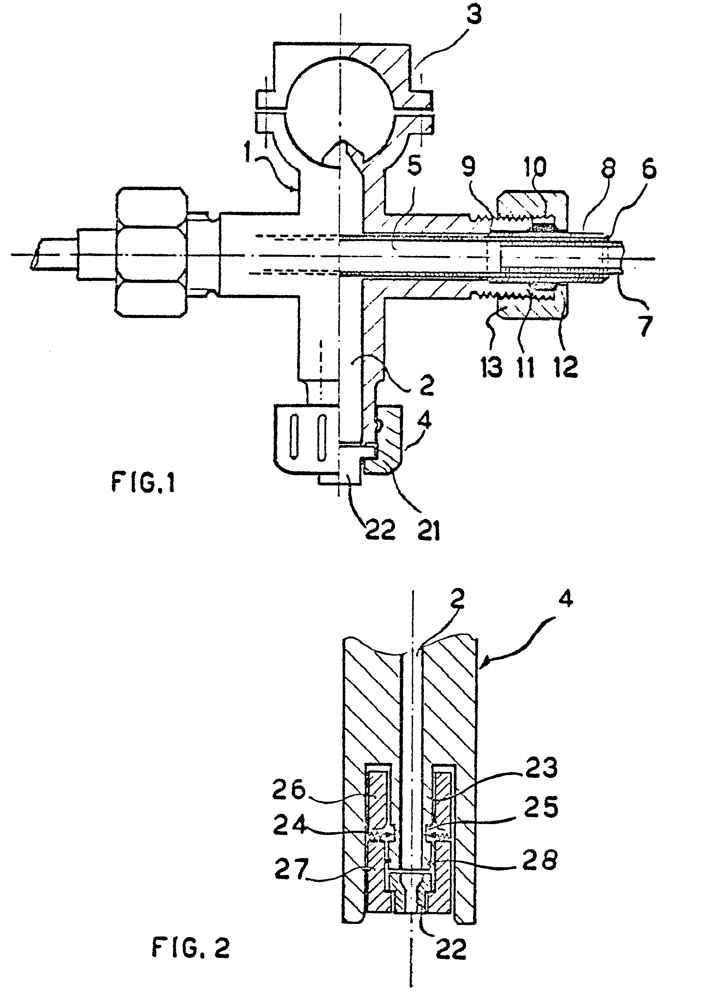

Suivant la figure 1, le dispositif consiste essentiellement en une pièce en forme de croix 1. Le conduit principal 2 comporte des extrémités 3, 4 dont l'une est adaptée pour être raccordée à la conduite d'alimentation (non représentée) par un collier et l'autre est munie du dispositif de distribution qui est généralement une buse ou un ajutage de pulvérisation. Avantageusement, on peut utiliser une buse disponible dans le commerce, par exemple une buse mono-jet ou une buse quadri-jet.

Dans le cas de la figure, un corps de buse 21 contenant une seule buse 22 est fixé sur le dispositif de l'invention au moyen d'un raccordement rapide par exemple, un raccordement dit «à baïonnette».

Suivant la figure 1, le dispositif comporte également un conduit secondaire 5 dans lequel est introduite une gaine ou tube souple 6 traversant le conduit principal 2. Le diamètre extérieur du tube souple 6 est légèrement inférieur au diamètre du conduit 5 afin de permettre le passage du liquide à pulvériser, entre le tube 6 et la paroi intérieure du conduit 2.

Aux deux extrémités du tube souple 6, est introduit un tube rigide 7, par exemple en laiton, qui est alimenté en air comprimé. Aux mêmes endroits, un tube semi-rigide 8 est glissé sur le tube souple 6 de manière à s'engager à butée contre l'épaulement 9 dans le raccord bicône 1. Une bague 10 de section biconique et emmanchée sur le tube semi-rigide est coincée entre l'extrémité 11 du raccord bicône et la paroi intérieure de l'écrou creux 13. Etant donné la conception des surfaces de serrage, la bague 10 écrase le tube semi-rigide 8 et le tube 6 contre le tube rigide 7. Ainsi, il ne peut se produire aucune fuite de liquide entre le tube souple 6 et le tube semi-rigide 8. Comme l'écrou 13 applique également le tube semi-rigide 8 contre l'épaulement 9 du raccord bicône, la matière semi-rigide du tube 8 y forme un joint empêchant ainsi le passage du liquide à pulvériser vers l'extérieur.

On constate donc que la conception du dispositif de fermeture de buses de la présente invention est simple et qu'il peut être constitué d'éléments produits en grande série et facilement disponibles sur le marché.

Le dispositif peut consister en un matériau synthétique rigide moulé sous pression. Il peut également consister en un matériau rigide par exemple du laiton, pour les raccords bicônes et en un matériau synthétique pour le conduit principal pour les raccordements à la rampe et pour la fixation des buses. L'assemblage des deux éléments en matériaux distincts peut être effectué par vissage; il peut également consister en un surmoulage de l'élément en laiton par une matière synthétique.

En se référant à la figure 2, on note que l'extrémité 4 du dispositif de l'invention est représentée à une échelle agrandie. Cette extrémité comporte le conduit principal 2 dont la paroi 23 est munie d'une encoche périphérique 25. La buse 22 est solidaire de l'élément de fixation 27 assemblé à l'élément 26 par vis ou par rivets; les deux éléments sont écartés par une rondelle métallique supportant un ressort 24 qui permet l'engagement d'ergots dans ladite encoche 25. La buse accrochée au dispositif de fermeture est positionnée correctement au moyen de rainures disposées longitudinalement dans la partie supérieure de la paroi 23 du conduit principal 2. L'élément 26 est muni d'ergots ou d'autres moyens de guidage permettant de positionner l'ensemble 26 - 27 - 22 correctement.

L'étanchéité du dispositif est assurée par un joint torique 28 qui empêche que le liquide à pulvériser contourne le moyen d'accrochage de la buse. Pour permettre d'écarter les ergots de fixation de manière à pouvoir décrocher la buse 22, par exemple pour la remplacer, le ressort 24 sera apparent assurant ainsi le décrochage à la main et/ou au moyen d'un outil adapté.

Ce dispositif présente l'avantage de permettre une substitution rapide d'une buse par une autre.

Le dispositif de fermeture de la présente invention présente l'avantage par rapport aux dispositifs connus de ne pas nécessiter de chambre et de ne pas modifier essentiellement la direction du liquide à pulvériser ou à épandre, ce qui diminue de manière importante les pertes de charges dans le circuit de liquide de pulvérisation, réduit l'usure du dispositif et réduit surtout l'encrassement résultant du dépôt des matières en suspension, en émulsion ou en solution dans le liquide.

En prévoyant un circuit d'alimentation en air comprimé adéquat, l'opérateur peut commander à distance la fermeture de chaque pulvérisateur séparément ou de deux, trois pulvérisateurs ou plus d'une section de rampes, en même temps.

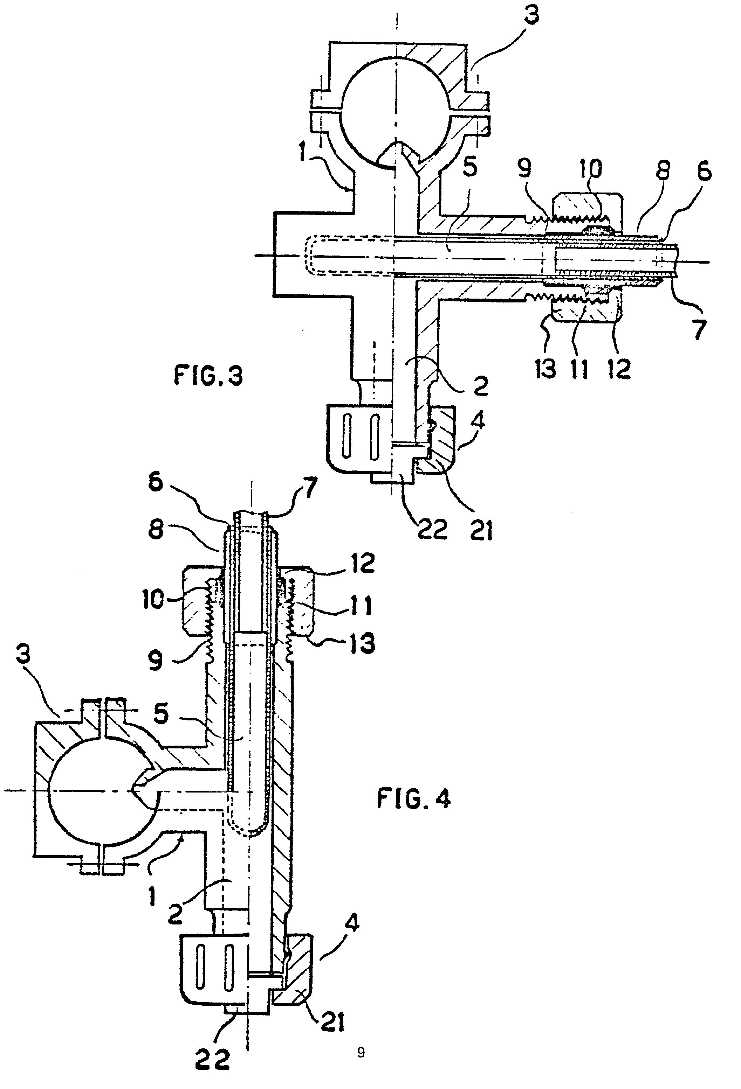

Dans le mode d'exécution de la figure 3, le tube souple 6 destiné à obturer le conduit principal 2 présente une extrémité en forme de doigtier qui aboutit au fond du conduit 5 obturé par un bouchon, par exemple, ou en cul de sac.

En se référant à la figure 4, on constate que le liquide de pulvérisation subit une modification de direction en suivant le conduit principal 2. Le conduit secondaire 5 aboutit dans ledit conduit 2 à l'endroit de l'angle formé par les deux branches du conduit principal. La fermeture est assurée par le tube souple 6 dont l'extrémité est en forme de doigtier et qui aboutit dans le conduit principal se terminant par la buse.

Etant donné la conception simple et l'assemblage facile des éléments, tout remplacement d'un élément usé est peu coûteux.

De par sa conception, le dispositif de fermeture de l'invention présente encore l'avantage qu'il est possible de maintenir une circulation et un recyclage continu du liquide de pulvérisation dans la rampe, vers le réservoir et ensuite à nouveau du réservoir vers la rampe, même lorsque la pulvérisation est totalement ou partiellement interrompue. De cette manière, la formation de dépôts dans les conduits traversés par le liquide est encore réduite.

Contrairement aux dispositifs connus, le dispositif d'accrochage de buse décrit permet, suivant l'invention, une protection complète du support de buse par l'extrémité particulière 4 du dispositif de fermeture de buse.

## Revendications

1. Dispositif de fermeture rapide destiné à arrêter l'alimentation d'une buse (22) utilisée dans des rampes de pulvérisation de liquide ou d'épandage, comportant un conduit principal (2) rigide connecté à une extrémité (3) à un conduit d'alimentation qui est relié à un réservoir de liquide, et présentant à son autre extrémité (4) ladite buse (22) et comportant également un élément obturateur flexible pouvant fermer le passage du conduit principal (2), caractérisé en ce qu'un conduit secondaire (5) rigide intersecte le conduit principal (2), lesdits deux conduits (2, 5) communiquant entre eux, et en ce que l'élément obturateur flexible est constitué par un tuyau flexible (6) qui est gonflable au moyen d'un fluide sous pression, qui est logé dans le conduit secondaire (5) et qui ferme le passage du conduit principal (2) quand il est à l'état gonflé.

2. Dispositif suivant la revendication 1, caractérisé en ce qu'il est constitué d'une pièce à deux conduits globalement orthogonaux communiquant entre eux dont le conduit principal (2) est adapté pour s'engager dans la conduite d'alimentation, d'une part, et pour recevoir la buse de pulvérisation, d'autre part, l'élément obturateur flexible (6) traversant le conduit principal (2) de part en part sans l'obturer tout en étant engagé de manière étanche dans le conduit secondaire (5) et étant gonflé par un fluide sous pression en vue de fermer le passage du conduit principal (2).

3. Dispositif suivant la revendication 1, caractérisé en ce qu'il est constitué d'une pièce qui comporte un conduit principal (2) pour le passage du liquide, le conduit principal (2) présentant une modification de direction, en ce que le conduit secondaire (5) aboutit dans le conduit principal (2) à l'angle formé par ses deux branches, et en ce que l'élément obturateur flexible (6) engagé de manière étanche dans le conduit secondaire (5) aboutit en forme de doigtier dans une des branches du conduit (2) pour obturer celui-ci, lorsqu'il est alimenté en un fluide sous pression.

4. Dispositif suivant l'une des revendications précédentes, caractérisé en ce que le raccordement étanche du tuyau flexible (6) dans le conduit secondaire (5) est assuré par le fait que le tuyau flexible (6) est pris à au moins une extrémité entre un tube rigide intérieur (7) et une gaine semirigide extérieure (8) sertie par un raccord bicône, le tuyau flexible (6) traversant le conduit (2) de part en part et le tube rigide (7) étant adapté pour recevoir, à son extrémité libre sortant du dispositif, le conduit d'alimentation en fluide sous pression.

5. Dispositif suivant l'une des revendications précédentes, caractérisé en ce que la buse est montée sur le conduit principal (2) via un dispositif quadri-jet.

6. Dispositif suivant l'une des revendications 1 à 4, caractérisé en ce que la buse est montée sur le conduit principal (2) via un corps de buse (21) mono-jet fixé au dispositif de fermeture (1) au moyen d'un raccordement rapide.

7. Dispositif suivant l'une des revendications 1 à 4, caractérisé en ce que, du côté de la buse, la paroi (23) du conduit principal (2) est munie d'une encoche périphérique (25) permettant l'engagement d'un ergot sous l'action d'un ressort (24) pour accrocher l'ensemble (26, 27) support de buse (22).

8. Dispositif suivant la revendication 7, caractérisé en ce que le positionnement correct de la buse (22) est effectué au moyen de rainures dans la paroi (23) du conduit principal (2) et de moyens de guidage pratiqués dans l'élément (26) support de buse (22) et s'engageant dans lesdites rainures.

9. Dispositif suivant l'une des revendications précédentes, caractérisé en ce que le tube flexible (6) est constitué par une matière plastique souple ou un caoutchouc résistant aux produits agressifs.

10. Dispositif suivant l'une des revendications précédentes, caractérisé en ce que le fluide sous pression, de préférence de l'air comprimé, est utilisé sous une pression de l'ordre de 7 bars.

## Patentansprüche

1. Abstellventil zum schnellen Sperren der Zufuhr von bei Sprühvorrichtungen oder Spritzgestängen benutzten Düsen (22) zum Sprühen von Flüssigkeiten, mit einem starren Hauptkanal (2), der an einem Ende (3) an einer an einem Flüssigkeitsbehälter verbundene Zufuhrleitung angeschlossen ist und am anderen Ende (4) die genannte Düse (22) trägt, und mit einem flexiblen Absperrorgan, das den Durchgang des Hauptkanals (2) zu sperren vermag, dadurch gekennzeichnet, dass ein starrer Nebenkanal (5) den Hauptkanal (2) schneidet, wobei beide Kanäle (2, 5) miteinander in Verbindung stehen, und dass das flexible Absperrorgan aus einem flexiblen durch ein unter Druck stehendes Fluid aufblasbaren Schlauch (6) besteht, der im Nebenkanal (5) angebracht ist und den Durchgang des Hauptkanals (2) im aufgeblasenen Zustand sperrt.

2. Abstellventil nach Anspruch 1, dadurch gekennzeichnet, dass es aus einem Teil besteht mit zwei im wesentlichen senkrechten miteinander in Verbindung stehenden Kanälen, wobei der Hauptkanal (2) in der Weise ausgelegt ist, dass er einerseits in die Zufuhrleitung eingebracht werden kann und andererseits die Sprühdüse aufnehmen kann, wobei das flexible Absperrorgan (6) den Hauptkanal (2) durchkreuzt ohne ihn zu verschliessen, dicht im Nebenkanal (5) angeordnet ist und durch ein unter Druck stehendes Fluid aufgeblasen ist, zum Sperren des Hauptkanaldurchgangs (2).

3. Abstellventil nach Anspruch 1, dadurch gekennzeichnet, dass es aus einem Teil besteht mit einem Hauptkanal (2) für den Durchlass der Flüssigkeit, wobei der Hauptkanal (2) eine Richtungsänderung aufweist, dass der Nebenkanal (5) in den Hauptkanal (2) unter Bildung des Winkels mündet, der durch die beiden Verzweigungen gebildet wird, und dass das flexible dicht in den Nebenkanal (5) angeordnete Absperrorgan (6) in Form eines Zapfens in eines der beiden Verzweigungen des Kanals (2) mündet, um diesen zu verschliessen, wenn es mit unter Druck stehendem Fluid beaufschlagt wird.

4. Abstellventil nach einem der vorstehenden Ansprüche, dadurch gekennzeichnet, dass die dichte Anordnung des flexiblen Schlauches (6) im Nebenkanal (5) dadurch erreicht wird, dass der flexible Schlauch (6) an mindestens einem Ende zwischen einem starren Innenrohr (7) und einem halbstarren Aussenmantel (8) gehalten wird, der durch ein doppelkonischen Verbindungsstück eingefasst wird, wobei der flexible Schlauch (6) den Kanal (2) durchkreuzt, und das starre Innenrohr (7) derart ausgelegt ist, dass es an seinem freien, aus dem Ventil hervorragenden Ende an die Zufuhrleitung für das unter Druck stehende Fluid anschliessbar ist.

5. Abstellventil nach einem der vorstehenden Ansprüche, dadurch gekennzeichnet, dass die Düse am Hauptkanal (2) mittels einer Vierstrahlvorrichtung befestigt ist.

6. Abstellventil nach einem der Ansprüche 1 bis 4, dadurch gekennzeichnet, dass die Düse am Hauptkanal (2) mittels eines einstrahligen Düsengehäuses (21) befestigt ist, das am Abstellventil mit Hilfe einer Schnellverbindung befestigt ist.

7. Abstellventil nach einem der Ansprüche 1 bis 4, dadurch gekennzeichnet, dass auf der Seite der Düse, die Hauptkanalwandung (23) mit einer umlaufenden Rille (25) versehen ist, die das Einschnappen einer Nase unter Wirkung einer Feder (24) erlaubt, zum Befestigen der Düsenaufhängung (26, 27).

8. Abstellventil nach Anspruch 7, dadurch gekennzeichnet, dass die korrekte Lage der Düse (22) durch in die Wandung (23) des Hauptkanals (2) ausgebildete Nuten und durch in der Düsenaufhängung (22) angeordnete Führungsmittel, die in die genannten Nuten eingreifen.

9. Abstellventil nach einem der vorstehenden Ansprüche, dadurch gekennzeichnet, dass der flexible Schlauch (6) aus elastischem Kunststoff oder Gummi besteht, wobei der Kunststoff oder das Gummi in Bezug auf agressive Stoffe widerstandsfähig ist.

10. Abstellventil nach einem der vorstehenden Ansprüche, dadurch gekennzeichnet, dass das unter Druck stehende Fluid, vorzugsweise Druckluft, bei einem Druck von ungefähr 7 bar verwendet wird.

**Claims**

1. Nozzle-closing device rapidly closed designed to stop the feeding of a nozzle (22) used in liquid spraying or spreading racks, comprising a rigid main duct (2) fed at one end (3) by the feed pipe connected to a liquid containing tank and equipped at the other end (4) with said nozzle (22), and also a flexible obturator which may shut off the passage of main duct (2), characterized in that a rigid secondary duct (5) crosses the main duct (2), said both ducts (2, 5) communicating with one another, and in that the flexible obturator consists in a flexible hose (6) which may be inflated by means of a fluid under pressure and which is lodged in the secondary duct (5) and shuts off the main duct (2) when inflated.

2. Device according to claim 1, in that it consists of a piece with two communicating ducts substantially perpendicular to one another, the main duct (2) of which is designed to engage into the feed pipe, on the one hand, and to receive the spraying nozzle, on the other hand, the obturator (6) passing right through the main duct (2) without shutting it off, whilst being engaged in a leakproof manner in the secondary duct (5) and being fed with a fluid under pressure to shut off the passage way of the main duct (2).

3. Device according to claim 1, characterized in that it consists of a piece comprising a main duct (2) for the passage of the liquid, the main duct (2) having a change in direction, in that the secondary duct (5) ending in the main duct (2) at the angle formed by its two branches, and in that the flexible obturator (6) engaged in a leak-proof manner in the secondary duct (5) ends in the form of a pocket in one of the branches of the duct (2) to shut off the latter when it is fed with a fluid under pressure.

4. Device according to one of the preceding claims, characterized in that the leak-proof connection of the flexible hose (6) in the secondary duct (5) is ensured by the fact that the flexible tube (6) is secured at at least one end between an inner rigid tube (7) and an outer semi-rigid sheath (8) crimped by a double-cone coupling, the flexible tube (6) passing right through the duct (2) and the rigid tube (7) being designed to receive, at its free end projecting from the device, the pipe supplying fluid under pressure.

5. Device according to one of the preceding claims, characterized in that the nozzle is mounted on the main duct (2) by means of a four-jet device.

6. Device according to one of claims 1 to 4, characterized in that the nozzle is mounted on the main duct (2) by means of a single-jet nozzle body (21) fastened to the closing device (1) by means of a quick-action connection.

7. Device according to one of claims 1 to 4, characterized in that, on the nozzle side, the wall (23) of the main duct (2) is provided with a peripheral notch (25) allowing a pin to engage under the action of a spring (24) so as to attach the support assembly (26, 27) for the nozzle (22).

8. Device according to claim 7, characterized in that the nozzle (22) is positioned correctly by means of grooves in the wall (23) of the main duct (2) and guide means provided in the support element (26) for the nozzle (22) and engaging in the said grooves.

9. Device according to one of the preceding claims, characterized in that the flexible tube (6) consists of a flexible plastic or a rubber resistant to the aggressive products.

10. Device according to any one of the preceding claims, characterized in that the fluid under pressure, preferably compressed air, is used under a pressure of the order of 7 bars.

0 162 046

FIG. 1

FIG. 2

0 162 046

FIG. 3

FIG. 4

9